# EUROPEAN PATENT SPECIFICATION

(11) **EP 1 640 349 B1**
(45) Date of publication and mention of the grant of the patent: **28.01.2009**
(21) Application number: 04742023.7
(22) Date of filing: 23.06.2004
(51) Int. Cl.: C04B 28/14, C04B 24/14

(54) **CONSTRUCTION PLASTER AND CORRESPONDING USES AND METHOD**
BAUPUTZ UND ENTSPRECHENDE ANWENDUNGEN UND VERFAHREN
GYPSE DE CONSTRUCTION ET SES PROCEDES ET UTILISATIONS CORRESPONDANTS

(30) Priority: 27.06.2003 ES 200301501
(43) Date of publication of application: 29.03.2006
(73) Proprietor: APC Europe S.A., 08400 Granollers (Barcelona) (ES)
(72) Inventor: POLO POZO, Francisco Javier, E-08210 Barberá del Vallés (ES); BARROSO PEREZ, Rubén, E-08400 Granollers (ES); DORREGO RODRIGUEZ, Fernando, E-28016 Madrid (ES); LUXAN GOMEZ DEL CAMPILLO, Maria Pilar, E-28016 Madrid (ES); REVUELTA CRESPO, David Jesús, E-28010 Madrid (ES); FERNANDEZ LUCO, Luis, E-28019 Madrid (ES)
(74) Representative: Curell Aguilà, Marcelino
(86) International application number: PCT/ES2004/000293
(87) International publication number: WO 2005/000768

(56) References cited:
- EP-A1- 0 171 480
- FR-A1- 2 600 998
- US-A- 1 770 797
- US-A- 5 391 245
- US-A- 5 775 047

## Description

### Field of the invention

The invention relates to a building plaster comprising at least 50% in weight of CaSO₄.

### State of the art

The basic working principle of building plasters consists in hydrating dehydrated, or at least partially dehydrated, gypsum. In particular, it consists in hydrating hemihydrate gypsum (CaSO₄·½H₂O) into dihydrate gypsum (CaSO₄·2H₂O). In practice, building plaster is prepared by dehydrating (calcining) dihydrate gypsum, which is usually obtained from nature. However, and largely due to the obtaining and manufacturing processes, building plaster is not a pure component, but rather a mixture of various components. On the one hand, gypsum can be found in building plaster in the form of hemihydrate gypsum, at least two types of anhydrous gypsum (usually known as anhydrite II and anhydrite III) and residual dihydrate gypsum. Therefore building plaster is usually considered to be a polyphasic plaster. On the other hand, building plaster contains further components other than CaSO₄, such as the residue of the natural stone from which the gypsum was obtained (such as clays, limestone, siliceous residue, etc.), additions (such as slaked lime, light aggregates, such as perlite, vermiculite, expanded clays, etc.), lime or siliceous type aggregates, etc., and additives added to vary different parameters. Among the additives used, mention can be made of accelerating agents (for example copper and iron sulphates), plastifying agents (such as toluensulphonates, acrylics, etc.), rheological agents (such as bentonite, montmorilonite, etc.), water-repelling agents (such as magnesium and aluminium palmitates and oleates, acrylics, etc.), thickening agents (such as starch, latex, etc.), various fibres (such as glass fibre, polypropylene fibre, etc.), etc.

According to the corresponding European standards, building plasters are required to contain at least 50% in weight of CaSO₄, with the remaining percentage being made up the above-mentioned residues, additions and additives.

Other additives contained in building plaster can be delaying agents. In various applications, it may be of interest to delay the setting time of the building plaster. Some organic acids, glues, sucrose and salts are known as possible delaying agent additives.

It is known to add blood derivatives to cement. This addition modifies various cement parameters. So, for example, adding blood derivatives to cement makes it possible to increase the retention of air. It is also known to delay the cement setting time (which is usually more of a drawback than an advantage, since cement setting times are usually a problem because they are too slow rather than too fast). The documents GB 363.058, GB 928.987, ES 464.985, EP 171.480 and ES 2.018.897, *inter alia,* can be quoted as examples.

### Summary of the invention

The object of the invention is a new building plaster that has a delayed setting time due to the addition of a new additive. This purpose is achieved by means of a building plaster of the type indicated at the beginning, characterised in that in addition it comprises more than 0.0025% in weight, relative to the CaSO₄, of hydrolysed erythrocytes.

The applicant has observed that by adding blood derivatives, in particular erythrocytes, to building plaster, there is no effect on the setting time. These results are surely due to the fact that the building plaster has a very different chemical composition to cement and the setting reactions and conditions in both cases are totally different from one another. Surprisingly the applicant has noticed that by adding hydrolysed erythrocytes, in amounts over 0.0025% in weight relative to the CaSO₄, to building plaster then the setting time is increased.

As the amount of hydrolysed erythrocytes added to the building plaster is increased, so the setting time of the mixture increases. After a certain value, the obtained mixture no longer has any industrial interest. In this sense, it is particularly preferred that the building plaster contains less than 1% in weight, relative to the CaSO₄, of hydrolysed erythrocytes.

Hydrolysed erythrocytes can be obtained using various methods or procedures. For example, to carry out the examples described below, hydrolysed erythrocytes were used in the following way: the erythrocytes were lysed (whereby haemoglobin was released into the medium) by subjecting them to high pressures or by adding water to them, then protease enzymes were added which performed the hydrolysis, and once the hydrolysis was complete it was possible to separate, by centrifugation, the remaining cells, the denaturalised haemoglobin and the agglomerates produced during the hydrolysis. In the method applied, said separation by centrifugation was not carried out, instead once the hydrolysis was completed the enzyme was inactivated (for example, by heating) and the obtained product was dried. Also, in the method used the cellular membranes were not separated from the medium before carrying out the hydrolysis. The hydrolysis carried out using the described method is not 100%, instead a hydrolysis of between 10% and 40%, preferably between 15% and 35% of haemoglobin with respect to the total haemoglobin is usually obtained. The percentage of hydrolysis carried out can be evaluated by determining the alpha-amino nitrogen, a method known to those skilled in the art. This means that, in practice, a compound is added to the building plaster which does not consist of totally hydrolysed erythrocytes but partially hydrolysed erythrocytes. The indicated percentages refer to the amount of totally hydrolysed erythrocytes added. However, since preferably the product added to the building plaster consists of partially hydrolysed erythrocytes, it is preferred to obtain the building plaster according to the invention by adding more than 0.00625% in weight, relative to the CaSO₄, of partially hydrolysed erythrocytes, said partially hydrolysed erythrocytes having a degree of hydrolysis between 10% and 40%, and very preferably between 15% and 35%. Also advantageously the building plaster according to the invention is characterised in that it comprises less than 10% in weight, relative to the CaSO₄, of partially hydrolysed erythrocytes, said partially hydrated erythrocytes having a degree of hydrolysis between 10% and 40%.

Advantageously the hydrolysed erythrocytes originate from mammals or birds. Preferably the hydrolysed erythrocytes come from pig, ox, cow, sheep, goat, horse, camel, chicken, turkey or ostrich.

Another object of the invention is a method for manufacturing building plaster according to the invention, characterised in that it comprises a stage of enzymatic hydrolysis of said erythrocytes. Effectively, the enzymatic hydrolysis of the erythrocytes means a more controlled and uniform hydrolysis can be obtained, allowing a very regular hydrolysis between the various manufacturing batches. However, it is also possible to carry out the hydrolysis stage by chemical means. The chemical hydrolysis is more aggressive and economical and is carried out using acids and alkalines at relatively high temperatures (approximately 100°C). Therefore, it is possible to opt for any of the two hydrolyses depending on the specific conditioning factors in each case, both being equally valid for obtaining building plaster according to the invention. In principle, the hydrolysis methods as such are known to a person skilled in the art. An example of enzymatic hydrolysis can be found in document US 4.262.022, which is included herein by reference.

The aim of the invention is also a new use of hydrolysed erythrocytes, particularly as an additive for building plaster.

Finally, the aim of the invention is also the use of hydrolysed erythrocytes to delay the setting time of building plaster.

### Brief description of the drawings

Fig. 1, a graph indicating the setting time according to the percentage % of erythrocytes and hydrolysed erythrocytes added to an industrial plaster of Paris (high purity plaster).
Fig. 2, a graph indicating the setting time according to the percentage % of erythrocytes and hydrolysed erythrocytes added to a high strength plaster.

### Examples

### Example 1: Obtaining the hydrolysed derivative from animal blood

The object of the test was to carry out an industrial process for hydrolysing erythrocytes with a protease that is available in the market (alcalase).

3000 Kg of erythrocytes of pig origin obtained by centrifugation of pig blood with added sodium tripolyphosphate as anti-coagulant, were diluted in drinking water from the general water works in a proportion of 1:3, to bring about the cellular lysis of the erythrocytes. The proportion of erythrocytes:water can vary depending on whether whole or prelysed erythrocytes are used.

An enzymatic hydrolysis was carried out following the method described in US patent 4.262.022.

The hydrolysed medium was dried using a spray-drier, operating at an air inlet temperature of 240 °C and an air outlet temperature of 90 °C, although the drying conditions may vary according to the working conditions or the spray-drier model used.

The final spray-dried product showed a 22.26% hydrolysis, which was analysed using the alpha-amino nitrogen determining technique.

In addition, it showed the features indicated in Table 1:

**Table 1**

| | |
|---|---|
| *Humidity* | 5.63 |
| *Protein* | 88.49 |
| *Ash* | 8.59 |

The microbiology of the final spray-dried product is summarised in Table 2:

**Table 2**

| *MICROBIOLOGICAL ANALYSIS* | |
|---|---|
| *Total aerobe count (c.f.u.*/*g)* | 1.0 x 10⁴ |
| *Entero bacteria (c.f.u.*/*g)* | <10 |
| *Clostridium SR (c.f.u.*/*g)* | 30 |
| *Salmonella (en 25 g)* | Absence |

### Example 2: Effect of spray-dried erythrocytes and additived hydrolysed spray-dried erythrocytes on hemihydrate plaster.

The spray-dried erythrocytes were obtained from spray drying the erythrocytes obtained from centrifugation of pig blood additived with sodium tripolyphosphate as anti-coagulant. The spray-drying conditions were similar to those described in Example 1 for enzymatically spray-drying hydrolysed erythrocytes.

The hydrolysed erythrocytes were obtained by following the protocol described in Example 1.

For a better understanding of the tests, hereinafter the following will apply:

| | |
|---|---|
| Spray-dried erythrocytes | = additive "A" |
| Spray-dried hydrolysed erythrocytes | = additive "B" |

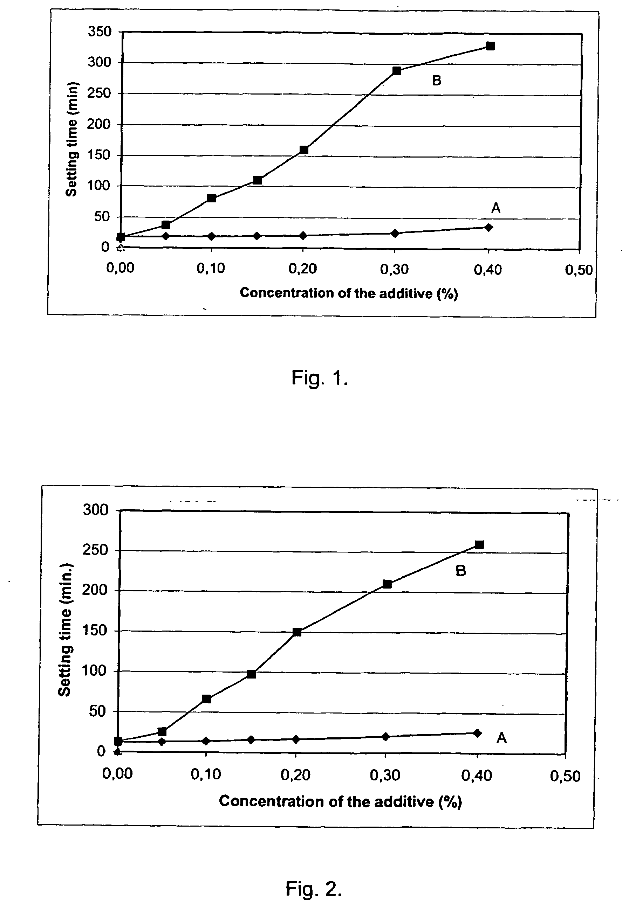

In order to determine the delay in the setting time of a hemihydrate plaster, an industrial plaster was used (high purity plaster, over 85% in weight of CaSO₄) without additives, as a reference and with additions of 0.5‰, 1‰, 1.5‰, 2‰, 3‰ and 4‰ weight of the additive "A" and "B" as delaying agent. The setting times, that are determined quantitatively, are indicated in Table 3 and Fig. 1. It must be remembered that additive "B" has a 22.26% degree of hydrolysis, that is, the erythrocytes have not been hydrolysed 100%.

**Table 3 : Plaster setting times, with additive "A" or "B"**

| Concentration of additives | Setting time (minutes) | |
|---|---|---|
| % | A | B |
| 0.00 | 18 | 17 |
| 0.05 | 19 | 37 |
| 0.10 | 19 | 80 |
| 0.15 | 20 | 110 |
| 0.20 | 21 | 160 |
| 0.30 | 26 | 290 |
| 0.40 | 36 | 330 |

The results indicate that product "B" has an obvious delaying effect, which makes it interesting for use as a regulating agent in the setting of hemihydrate plasters.

The data contained in Table 3 is represented graphically in Fig. 1.

It must be highlighted that product "A" appeared virtually inert insofar as the setting time is concerned, that is, it does not cause a significant delay in the setting time.

### Example 3: Effect of spray-dried erythrocytes and additived spray-dried hydrolysed erythrocytes on high strength plasters.

The spray-dried erythrocytes were obtained following the protocol described in Example 2. The hydrolysed erythrocytes were obtained following the protocol described in Example 1.

As in the previous examples:

| | |
|---|---|
| Spray-dried erythrocytes | = additive "A" |
| Spray-dried hydrolysed erythrocytes | = additive "B" |

In order to determine the delay in the setting time of a high strength plaster (hemihydrate plaster with a surface hardness over 80 Shore C), an experimental plaster was used, without additives, and with additions of 0.5‰, 1‰, 1.5%o, 2‰, 3‰ and 4‰ weight of additive "A" and "B" as delaying agent. The setting times, that are determined quantitatively, are indicated in Table 4 and Fig. 2. Once again it must be remembered that additive "B" has a 22.26% degree of hydrolysis.

**Table 4: Setting times of high strength plaster, with the addition of additive "A" or "B"**

| Concentration of additives | Setting time (minutes) | |
|---|---|---|
| % | A | B |
| 0.00 | 12 | 13 |
| 0.05 | 13 | 25 |
| 0.10 | 14 | 66 |
| 0.15 | 16 | 97 |
| 0.20 | 17 | 150 |
| 0.30 | 21 | 210 |
| 0.40 | 26 | 260 |

The results indicate the same as that which was observed in Example 2, where product "B" is potentially interesting for use as a delaying agent for the setting of high strength plasters. The data contained in Table 4 is represented graphically in Fig. 2.

## Claims

1. Building plaster comprising at least 50% in weight of CaSO₄, **characterised in that** in addition it comprises more than 0.0025% in weight, relative to the CaSO₄, of hydrolysed erythrocytes.

2. Building plaster according to claim 1, **characterised in that** it comprises less than 1 % in weight, relative to the CaSO₄, of hydrolysed erythrocytes.

3. Building plaster according to claim 1, **characterised in that** it comprises more than 0.00625% in weight, relative to the CaSO₄, of partially hydrolysed erythrocytes, said partially hydrolysed erythrocytes having a degree of hydrolysis between 10% and 40%.

4. Building plaster according to claim 3, **characterised in that** it comprises less than 10% in weight, relative to the CaSO₄, of partially hydrolysed erythrocytes, said partially hydrolysed erythrocytes having a degree of hydrolysis between 10% and 40%.

5. Building plaster according to any claim 1 to 4, **characterised in that** said hydrolysed erythrocytes are of animal origin said animal being a mammal or a bird.

6. Building plaster according to claim 5, **characterised in that** said animal is from the group comprising pig, ox, cow, sheep, goat, horse, camel, chicken, turkey and ostrich.

7. Manufacturing method of a building plaster according to any of the claims 1 to 6, **characterised in that** it comprises a stage in which said erythrocytes are hydrolysed enzymatically.

8. Manufacturing method of a building plaster according to any of the claims 1 to 6, **characterised in that** it comprises a stage in which said erythrocytes are hydrolysed chemically.

9. Use of hydrolysed erythrocytes as an additive for building plaster.

10. Use of hydrolysed erythrocytes for causing a delay in the setting of the building plaster.

## Patentansprüche

1. Bauputz mit mindestens 50 Gew.-% CaSO₄, **dadurch gekennzeichnet, dass** er zusätzlich, bezogen auf das CaSO₄, mehr als 0,0025 Gew.-% hydrolysierte Erythrozyten enthält.

2. Bauputz nach Anspruch 1, **dadurch gekennzeichnet, dass** er bezogen auf das CaSO₄ weniger als 1 Gew.-% hydrolysierte Erythrozyten enthält.

3. Bauputz nach Anspruch 1, **dadurch gekennzeichnet, dass** er bezogen auf das CaSO₄ mehr als 0,00625 Gew.-% teilweise hydrolysierte Erythrozyten enthält, deren Hydrolysegrad zwischen 10 und 40 % liegt.

4. Bauputz nach Anspruch 3, **dadurch gekennzeichnet, dass** er bezogen auf das CaSO₄ weniger als 10 Gew.-% teilweise hydrolysierte Erythrozyten enthält, deren Hydrolysegrad zwischen 10 und 40 % liegt.

5. Bauputz nach einem der Ansprüche 1 bis 4, **dadurch gekennzeichnet, dass** die hydrolysierten Erythrozyten tierischen Ursprungs sind und das Tier ein Säugetier oder Vogel ist.

6. Bauputz nach Anspruch 5, **dadurch gekennzeichnet, dass** das Tier aus der Gruppe Schwein, Ochse, Kuh, Schaf, Ziege, Pferd, Kamel, Huhn, Truthahn, Strauß stammt.

7. Herstellungsverfahren für einen Bauputz nach einem der Ansprüche 1 bis 6, **dadurch gekennzeichnet, dass** es einen Schritt umfasst, in dem die Erythrozyten enzymatisch hydrolysiert werden.

8. Herstellungsverfahren für einen Bauputz nach einem der Ansprüche 1 bis 6, **dadurch gekennzeichnet, dass** es einen Schritt umfasst, in dem die Erythrozyten chemisch hydrolysiert werden.

9. Verwendung hydrolysierter Erythrozyten als Zusatz für Bauputz.

10. Verwendung hydrolysierter Erythrozyten zum Verzögern des Abbindens von Bauputz.

## Revendications

1. Gypse de construction comprenant au moins 50% en poids de CaSO₄, **caractérisé en ce qu'**il comprend en outre plus de 0,0025% en poids, par rapport au CaSO₄, d'érythrocytes hydrolysés.

2. Gypse de construction selon la revendication 1, **caractérisé en ce qu'**il comprend moins de 1 % en poids, par rapport au CaSO₄, d'érythrocytes hydrolysés.

3. Gypse de construction selon la revendication 1, **caractérisé en ce qu'**il comprend plus de 0,00625% en poids, par rapport au CaSO₄, d'érythrocytes partiellement hydrolysés, lesdits érythrocytes partiellement hydrolysés présentant un degré d'hydrolyse compris entre 10% et 40%.

4. Gypse de construction selon la revendication 3, **caractérisé en ce qu'**il comprend moins de 10% en poids, par rapport au CaSO₄, d'érythrocytes partiellement hydrolysés, lesdits érythrocytes partiellement hydrolysés présentant un degré d'hydrolyse compris entre 10% et 40%.

5. Gypse de construction selon l'une quelconque des revendications 1 à 4, **caractérisé en ce que** lesdits érythrocytes hydrolysés sont d'origine animale, ledit animal étant un mammifère ou un oiseau.

6. Gypse de construction selon la revendication 5, **caractérisé en ce que** ledit animal provient du groupe comprenant porc, boeuf, vache, mouton, chèvre, cheval, chameau, poulet, dinde et autruche.

7. Procédé de préparation d'un gypse de construction selon l'une quelconque des revendications 1 à 6, **caractérisé en ce qu'**il comprend une étape dans laquelle lesdits érythrocytes sont hydrolysés par voie enzymatique.

8. Procédé de préparation d'un gypse de construction selon l'une quelconque des revendications 1 à 6, **caractérisé en ce qu'**il comprend une étape dans laquelle lesdits érythrocytes sont hydrolysés par voie chimique.

9. Utilisation d'érythrocytes hydrolysés en tant qu'additif pour un gypse de construction.

10. Utilisation d'érythrocytes hydrolysés pour retarder la prise du gypse de construction.
